# EUROPEAN PATENT APPLICATION

(11) **EP 4 772 397 A1**
(43) Date of publication of application: **08.07.2026**
(21) Application number: 24859971.4
(22) Date of filing: 30.08.2024
(51) Int. Cl.: B60Q 1/26, G08G 1/16

(54) **ROAD SURFACE DRAWING DEVICE**

(30) Priority: 31.08.2023 JP 2023141246
(71) Applicant: Koito Manufacturing Co., Ltd., Tokyo 141-0001 (JP)
(72) Inventor: SUDO, Yuki, Shizuoka-shi, Shizuoka 424-8764 (JP); KITAZAWA, Yukiko, Shizuoka-shi, Shizuoka 424-8764 (JP)
(74) Representative: Cabinet Beau de Loménie
(86) International application number: PCT/JP2024/031265
(87) International publication number: WO 2025/047946

(57) **Abstract**

This road surface drawing device displays a road surface drawing pattern (P) on a road surface. The road surface drawing pattern (P) includes a bright part (10) and a dark part (20) which is irradiated along at least a part of the bright part (10) and has a smaller luminance than the bright part (10).

## Description

### TECHNICAL FIELD

The present disclosure relates to a road surface rendering device.

### BACKGROUND ART

Patent Literature 1 discloses a road surface rendering device that is mounted on a vehicle or the like and displays an intention to other traffic participants such as pedestrians and operators of other vehicles by irradiating a road surface with a road surface rendering pattern.

### CITATION LIST

### PATENT LITERATURE

Patent Literature 1: WO2022/168543

### SUMMARY OF INVENTION

### TECHNICAL PROBLEM

If it is possible to promote actions such as standing still or improve visibility of a road surface rendering pattern for other traffic participants who have viewed the road surface rendering pattern, smoother communication on traffic can be expected by using a road surface rendering device.

An object of the present disclosure is to provide a road surface rendering device that makes communication on traffic smoother.

### SOLUTION TO PROBLEM

A road surface rendering device according to one aspect of the present disclosure is a road surface rendering device for displaying a road surface rendering pattern on a road surface, in which
the road surface rendering pattern includes a bright portion and a dark portion projected along at least a part of the bright portion, the dark portion having lower luminance than the bright portion.

According to the above configuration, since the road surface rendering pattern includes the bright portion and the dark portion having lower luminance than the bright portion, the road surface rendering device can highlight the road surface rendering pattern by a contrast between the bright portion and the dark portion. Accordingly, a road surface rendering device that can project a road surface rendering pattern that more easily attracts attention of other traffic participants and makes communication on traffic smoother is provided.

### ADVANTAGEOUS EFFECTS OF INVENTION

According to the present disclosure, it is possible to provide a road surface rendering device that makes communication on traffic smoother.

### BRIEF DESCRIPTION OF DRAWINGS

[FIG. 1] FIG. 1 illustrates a road surface rendering device mounted on a vehicle and a road surface rendering pattern.
[FIG. 2] FIG. 2 is a cross-sectional view of the road surface rendering device.
[FIG. 3] FIG. 3 illustrates an intersection where a road surface rendering pattern is rendered.
[FIG. 4] FIG. 4 illustrates an example of a road surface rendering pattern according to a first embodiment.
[FIG. 5] FIG. 5 is a block diagram of the vehicle and the road surface rendering device.
[FIG. 6] FIG. 6 illustrates another example of the road surface rendering pattern according to the first embodiment.
[FIG. 7] FIG. 7 illustrates a road surface rendering pattern in which an area of a dark portion changes.
[FIG. 8] FIG. 8 illustrates a shape of a bright portion according to Modification 1.
[FIG. 9] FIG. 9 illustrates a shape of a bright portion according to Modification 2.
[FIG. 10] FIG. 10 illustrates a shape of a bright portion according to Modification 2.
[FIG. 11] FIG. 11 illustrates an example of the road surface rendering pattern according to a second embodiment.
[FIG. 12] FIG. 12 illustrates another example of the road surface rendering pattern according to the second embodiment.
[FIG. 13] FIG. 13 illustrates another example of the road surface rendering pattern according to the second embodiment.

### DESCRIPTION OF EMBODIMENTS

Hereinafter, embodiments of the present disclosure will be described with reference to the drawings. For convenience of description, description on members having the same reference numerals as those already described in the description of the embodiments will be omitted. Further, dimensions of members illustrated in the drawings may be different from actual dimensions of the members for convenience of description.

In the description according to the present embodiments, a "right-front direction" and a "right-rear direction" may be appropriately referred to for convenience of description. Here, the "right-front direction" is a direction extending in a "rightward direction" and a "forward direction". The "right-rear direction" is a direction extending in the "rightward direction" and a "rearward direction". A reference numeral U illustrated in the drawings to be described later indicates an upward direction. A reference numeral D indicates a downward direction. A reference numeral F indicates the forward direction. A reference numeral B indicates the rearward direction. A reference numeral L indicates a leftward direction. A reference numeral R indicates the rightward direction. These directions correspond to directions viewed from a driver in a vehicle.

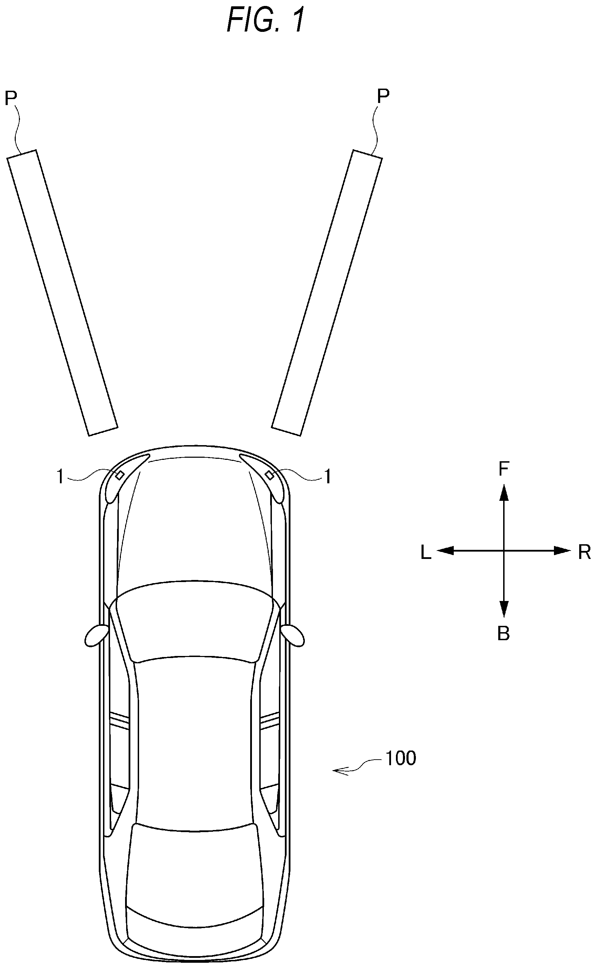

A road surface rendering device 1 according to the present embodiments provided in a vehicle 100 will be described with reference to FIG. 1. FIG. 1 illustrates the road surface rendering device 1 mounted on the vehicle 100 and a road surface rendering pattern P.

In the illustration of FIG. 1, the road surface rendering device 1 is stored in a headlight of the vehicle 100. The road surface rendering device 1 is configured to display the road surface rendering pattern P by projecting a road surface with light.

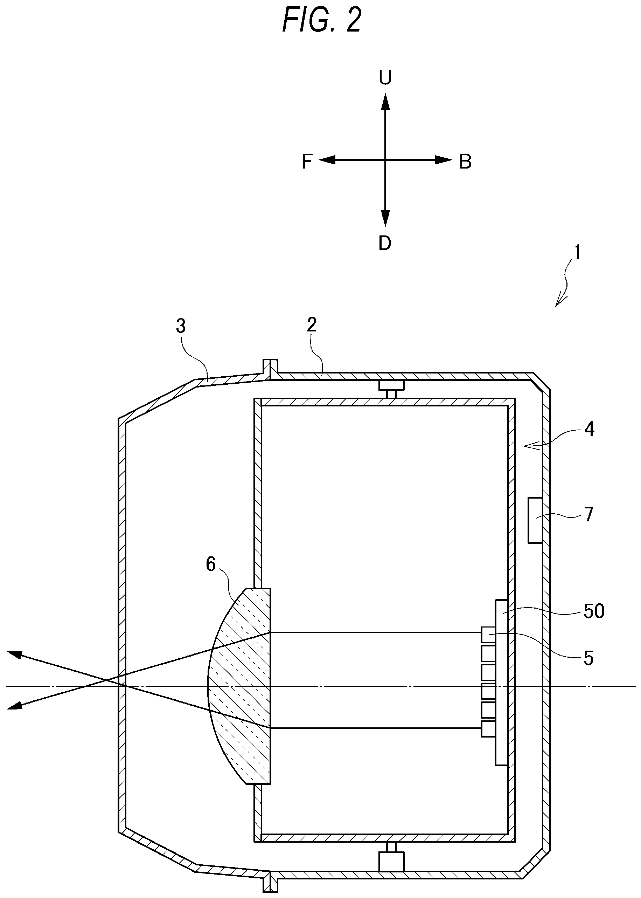

FIG. 2 is a cross-sectional view of the road surface rendering device 1. The road surface rendering device 1 includes a lamp body 2 having an opening on a front side, and a transparent outer cover 3 that covers the opening of the lamp body 2. The lamp body 2 and the outer cover 3 define a lamp chamber 4, in which a plurality of light sources 5, an optical member 6, and a road surface rendering control unit 7 are accommodated.

The light source 5 is implemented by, for example, a light emitting diode (LED) element or a laser diode (LD) element. The light source 5 may be implemented by a semiconductor light emitting element that emits laser light.

The light source 5 is mounted on a substrate 50. The substrate 50 may be formed of, for example, a glass material such as silica glass, borosilicate silicate glass, and non-alkali borosilicate silicate glass, or a resin material such as polyethylene terephthalate, polyethylene naphthalate, polypropylene, and a cycloolefin polymer.

The optical member 6 is configured to refract light emitted from the light source 5 and emit the light toward a road surface. The optical member 6 is, for example, a non-spherical lens in which a front surface is a convex surface and a rear surface is a flat surface. The optical member 6 may be formed of a translucent material such as a transparent resin such as acrylic. The light source 5 is configured to change illuminance during lighting by changing a duty ratio or the like.

The road surface rendering control unit 7 is configured to control turning on and off of the light source 5. The road surface rendering control unit 7 is configured to control the plurality of light sources 5 to generate a desired image on the road surface by controlling turning on and off of the plurality of light sources 5. Details of operation of the road surface rendering control unit 7 will be described later.

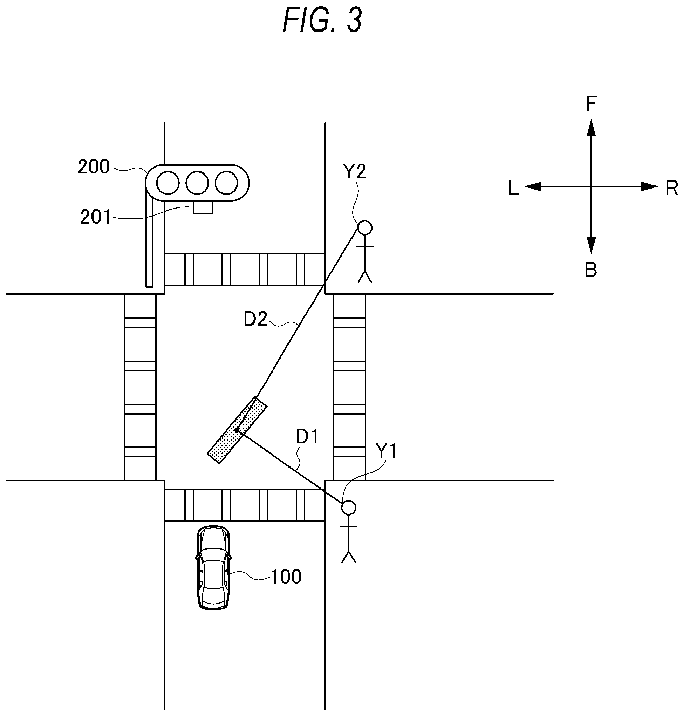

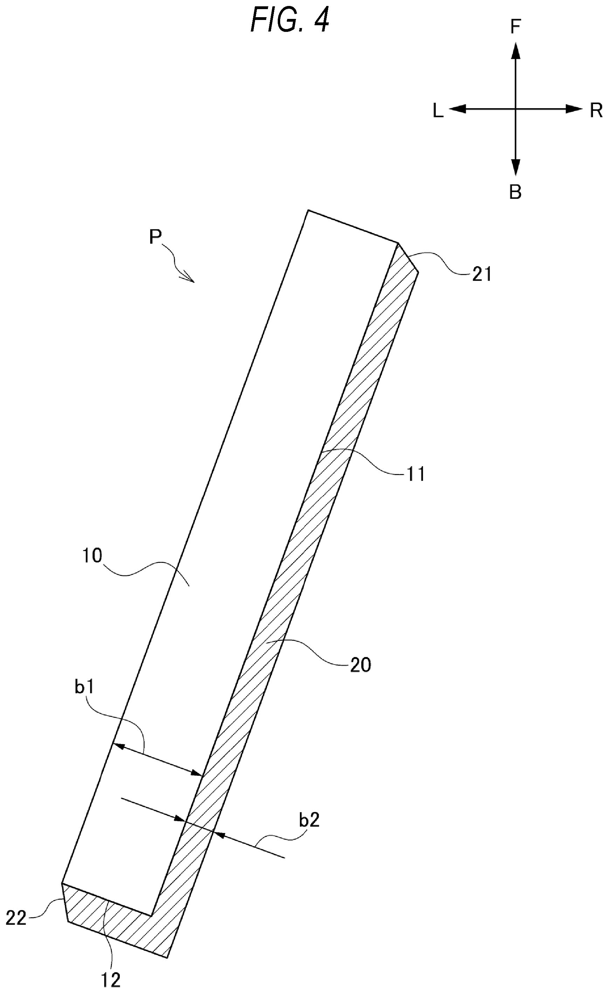

Next, the road surface rendering pattern P and an action thereof according to the present embodiments will be described with reference to FIGS. 3 and 4. FIG. 3 illustrates an intersection where the road surface rendering pattern P is rendered.

As illustrated in FIG. 3, the road surface rendering device 1 is configured to display the road surface rendering pattern P, in a case where the vehicle 100 is in front of the intersection where the vehicle 100 is about to enter. In the illustration of FIG. 3, the road surface rendering pattern P indicates that the vehicle 100 is about to turn right at the intersection.

FIG. 4 illustrates an example of the road surface rendering pattern P. As illustrated in FIG. 4, the road surface rendering pattern P includes a bright portion 10 and a dark portion 20. In the road surface rendering pattern P, the dark portion 20 is displayed to have lower luminance than the bright portion 10. For example, the luminance of the dark portion 20 may be substantially 50% of the luminance of the bright portion 10. The light source 5 that defines the dark portion 20 is configured to be turned on at lower illuminance than the light source 5 that defines the bright portion 10. The dark portion 20 is projected along at least a part of the bright portion 10. In the illustration of FIG. 4, the dark portion 20 is displayed in an L shape along two sides of an outer edge line of the bright portion 10.

In the road surface rendering device 1 according to the present embodiments, since the road surface rendering pattern P includes the bright portion 10 and the dark portion 20 having lower luminance than the bright portion 10, the road surface rendering device 1 can highlight the road surface rendering pattern P by a contrast between the bright portion 10 and the dark portion 20.

### (First Embodiment)

An example of highlighting of the road surface rendering pattern P according to the first embodiment will be described. The road surface rendering pattern P according to the first embodiment is visually recognized by a traffic participant as if the road surface rendering pattern P has a height through a combination of the bright portion 10 and the dark portion 20. In the illustration of FIG. 3, the other traffic participants are pedestrians Y1, Y2.

For example, parts 21, 22 of an outer edge line of the dark portion 20 of the road surface rendering pattern P extend in directions obliquely intersecting an outer edge line (for example, a closest portion 11 and an outer edge line 12 to be described later) of the bright portion 10 adjacent to the dark portion 20. The dark portion 20 has a width b2 smaller than a width b1 of the bright portion 10. Accordingly, the road surface rendering pattern P is visually recognized by the traffic participant as if the road surface rendering pattern P has a height.

In the road surface rendering device 1 according to the present embodiment, the road surface rendering pattern P is seen as a three-dimensional obstacle from the other traffic participants. For this reason, it is possible to cause the other traffic participants to take an instinctive action such as stopping to avoid a collision with the three-dimensional obstacle. Since the road surface rendering device 1 renders the road surface rendering pattern P visually recognized as a three-dimensional obstacle in this manner, it is easier for the other traffic participants to draw attention thereto and stop.

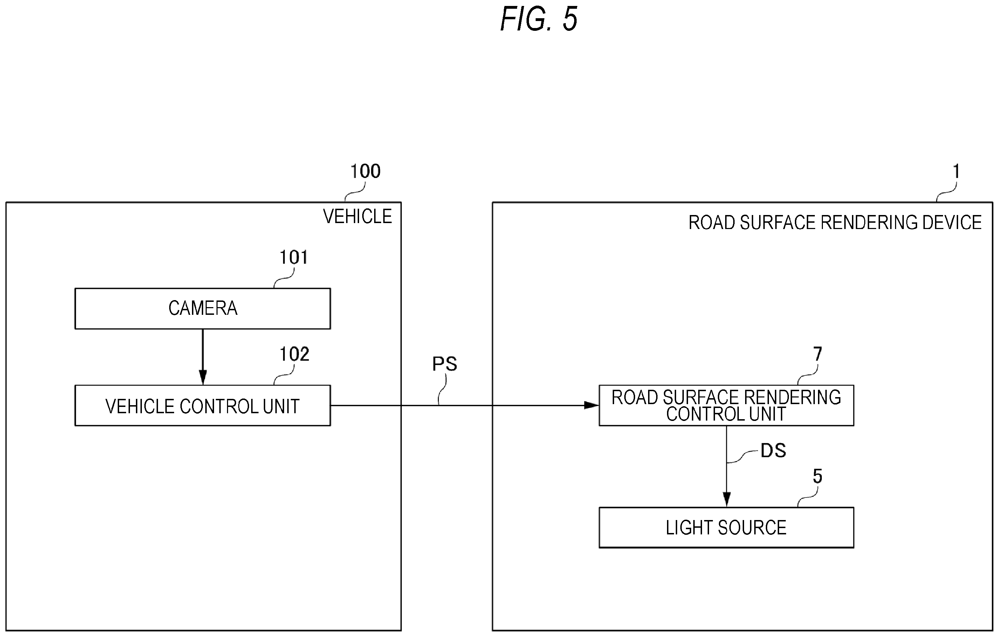

The dark portion 20 may be projected such that a position of the dark portion 20 relative to the bright portion 10 differs depending on a situation. That is, the road surface rendering device 1 may generate the bright portion 10 and the dark portion 20 to be seen as a three-dimensional obstacle by the other traffic participants it aims to alert. An example in which radiation is performed such that the position of the dark portion 20 relative to the bright portion 10 differs depending on a position of a pedestrian will be described with reference to FIGS. 3 to 6. FIG. 5 is a block configuration diagram of the vehicle 100 and the road surface rendering device 1.

The vehicle 100 according to the present embodiment includes a camera 101 and a vehicle control unit 102. The camera 101 is a camera including an imaging element such as a charge-coupled device (CCD) and a complementary MOS (CMOS). The camera 101 is configured to detect traffic participants such as the pedestrians Y1, Y2 in a vicinity of the vehicle 100, and the vehicle control unit 102 output pedestrian information PS including positions of the traffic participants based on an output of the camera 101.

The road surface rendering control unit 7 is configured to determine a direction in which the pedestrians are present relative to the road surface rendering pattern P to be displayed based on the pedestrian information PS, and determine the position where the dark portion 20 is formed relative to the bright portion 10 in the road surface rendering pattern P. The road surface rendering control unit 7 is configured to generate a rendering signal DS regarding the position where the dark portion 20 is formed relative to the bright portion 10, and control the illuminance of the light source 5 based on the rendering signal DS.

Here, it is assumed that the vehicle control unit 102 detects the pedestrian Y1 in FIG. 3 from an image output by the camera 101. The road surface rendering control unit 7 acquires the pedestrian information PS indicating the position of the pedestrian Y1 from the vehicle control unit 102, and determines that the pedestrian Y1 is present in the right-rear direction relative to the road surface rendering pattern P to be displayed.

Here, the road surface rendering control unit 7 determines the position where the dark portion 20 is formed relative to the bright portion 10 such that the closest portion 11, which is the outer edge line of the bright portion 10 that is close to the detected pedestrian Y1, appears to rise from the road surface. In the example of FIGS. 3 and 4, since the pedestrian Y1 is present in the right-rear direction relative to the road surface rendering pattern P, the outer edge line of the bright portion 10 which faces the right-rear direction is the closest portion 11. By forming the dark portion 20 along the closest portion 11, the closest portion 11 is visually recognized as rising. For this reason, the road surface rendering control unit 7 outputs the rendering signal DS such that the dark portion 20 is formed along the closest portion 11, and controls the illuminance of the corresponding light source 5.

It is assumed that the camera 101 further detects the pedestrian Y2 in FIG. 3. The road surface rendering control unit 7 determines that the pedestrian Y2 is present in the right-front direction relative to the road surface rendering pattern P to be displayed based on the pedestrian information PS.

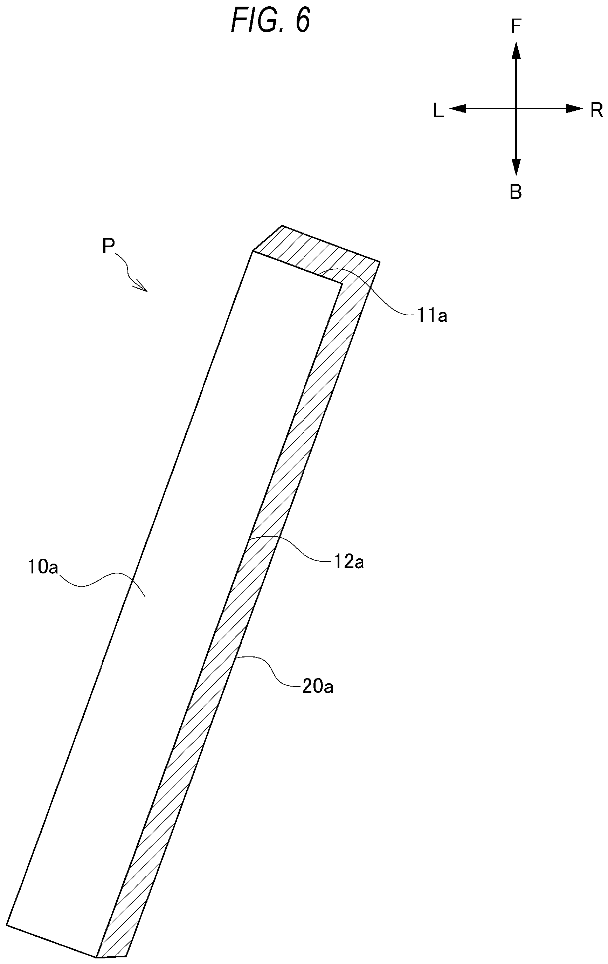

FIG. 6 illustrates another example of the road surface rendering pattern P. In the example of FIG. 3, since the pedestrian Y2 is present in the right-front direction relative to the road surface rendering pattern P, an outer edge line of a bright portion 10a which faces the right-front direction illustrated in FIG. 6 is a closest portion 11a. By forming a dark portion 20a along the closest portion 11a, the closest portion 11a is visually recognized as rising. For this reason, the road surface rendering control unit 7 is configured to output the rendering signal DS such that the dark portion 20a is formed along the closest portion 11a, and control the illuminance of the corresponding light source 5.

In the road surface rendering device 1 according to the present embodiment, by acquiring the positions of the pedestrians Y1, Y2, it is possible to display the road surface rendering pattern P to more easily communicate with pedestrians. In particular, since the closest portion 11, which is the outer edge line of the bright portion 10 that is close to the detected pedestrians Y1, Y2, rises from the road surface, it is possible to restrict the pedestrians Y1, Y2 from moving toward the road surface rendering pattern P.

As illustrated in FIGS. 4 and 6, the dark portions 20, 20a of the road surface rendering pattern P according to the present embodiment are projected such that outer edge lines 12, 12a of the bright portions 10, 10a, which are different from and are connected to the closest portions 11, 11a, rise from the road surface. For example, the dark portions 20, 20a are formed along not only the closest portions 11, 11a but also the outer edge lines 12, 12a.

In the road surface rendering device 1 according to the present embodiment, the road surface rendering pattern P is displayed such that the closest portions 11, 11a and the outer edge lines 12, 12a connected to the closest portions 11, 11a rise from the road surface when viewed from the pedestrians Y1, Y2, and thus the road surface rendering pattern P is displayed to have a more three-dimensional shape.

When there are two or more detected pedestrians Y1, Y2, the road surface rendering pattern P is desirably displayed such that a closest portion to the pedestrian having a shorter distance between distances D1, D2 from the road surface rendering pattern P to the pedestrians Y1, Y2 rises.

The road surface rendering control unit 7 may be configured to receive not only the pedestrian information PS but also vehicle information including a traveling direction of the vehicle 100 from the vehicle control unit 102. In the illustration of FIG. 3, the vehicle 100 is about to travel in the right-front direction to turn right. The road surface rendering control unit 7 is configured to receive, from the vehicle control unit 102, the vehicle information indicating that the vehicle 100 that is about to travel in the right-front direction.

At this time, the dark portion 20 may be projected based on the vehicle information including the traveling direction of the vehicle 100 such that the outer edge line of the bright portion 10 along a scheduled route of the vehicle 100 appears to rise from the road surface. In the illustration of FIG. 3, since the vehicle 100 is about to travel in the right-front direction, as illustrated in FIG. 4, the dark portion 20 is desirably formed along an outer edge line of the bright portion 10 which extends in the right-front direction (outer edge line corresponding to the closest portion 11 in the illustration of FIG. 4).

In the road surface rendering device 1 according to the present embodiment, since the dark portion 20 is projected to extend along the scheduled route of the vehicle 100, the road surface rendering pattern P is displayed to rise along the scheduled route of the vehicle 100. Accordingly, it is possible to restrict the pedestrians Y1, Y2 from moving across the scheduled route of the vehicle 100.

An area of the dark portion 20 to be formed may change according to a degree of risk derived based on at least one of the pedestrian information PS including the positions of the pedestrians Y1, Y2 and the vehicle information including the traveling direction of the vehicle 100.

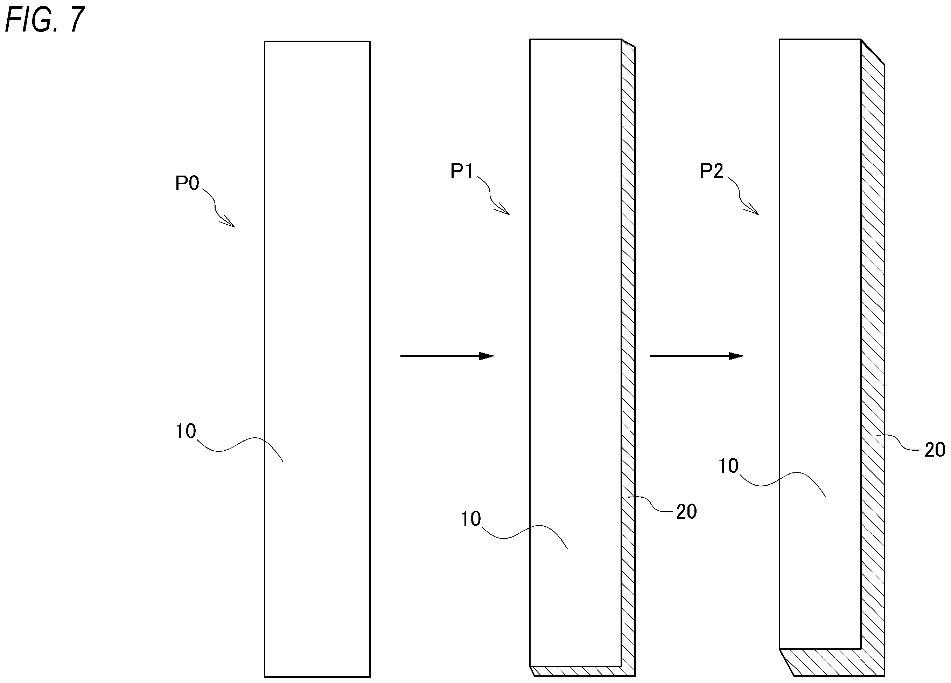

An example in which the area of the dark portion 20 changes according to the degree of risk output based on the pedestrian information PS when the camera 101 detects the pedestrian Y1 will be described. FIG. 7 illustrates road surface rendering patterns P0, P1, and P2 in which the area of the dark portion 20 changes. The road surface rendering control unit 7 is configured to derive the degree of risk from the distance D1 between the road surface rendering pattern P and the pedestrian Y1.

In a case where the distance D1 between the road surface rendering pattern P and the pedestrian Y1 is sufficiently large, the road surface rendering control unit 7 determines that the degree of risk is sufficiently small, and the road surface rendering pattern P0 in which the dark portion 20 is not formed is displayed.

In a case where the distance D1 between the road surface rendering pattern P and the pedestrian Y1 becomes shorter, the road surface rendering control unit 7 determines that there is slight danger, and displays the road surface rendering pattern P1 in which the dark portion 20 is formed. In a case where the distance D1 between the road surface rendering pattern P and the pedestrian Y1 further becomes shorter, the road surface rendering control unit 7 determines that it is dangerous, and displays the road surface rendering pattern P2 in which the area of the dark portion 20 is larger than that of the road surface rendering pattern P1. The road surface rendering pattern P2 is visually recognized as an obstacle higher than the road surface rendering pattern P1.

In the road surface rendering device 1 according to the present embodiment, a degree to which the pedestrian Y1 pays attention to the road surface rendering pattern P can be adjusted by changing an area in which the dark portion 20 is projected according to the degree of risk derived from the pedestrian information PS and the vehicle information. In particular, by displaying the road surface rendering pattern P such that the area of the dark portion 20 increases as the degree of risk increases, it is possible to restrict the pedestrian Y1 having a high degree of risk from moving across the road surface rendering pattern P.

The area of the dark portion 20 to be formed may change according to a lapse of time during which the road surface rendering pattern P is displayed. For example, immediately after the display of the road surface rendering is started, no dark portion may be formed as in the road surface rendering pattern P0. Thereafter, after display time of road surface rendering elapses, the road surface rendering pattern P0 may be changed to the road surface rendering pattern P1 and the road surface rendering pattern P2.

In the road surface rendering device 1 according to the present embodiment, since the area of the dark portion 20 to be formed changes with the lapse of time during which the road surface rendering pattern P is displayed, the degree of attention to the road surface rendering pattern P can be improved. For example, even if the display of the road surface rendering pattern P is not noticed at a beginning of the display of the road surface rendering pattern P, the display of the road surface rendering pattern P is easily noticed since the area of the dark portion 20 to be formed changes.

As described above, the road surface rendering device 1 includes a plurality of light sources configured to emit light that defines the bright portion 10 and the dark portion 20. The light source 5 is configured to adjust the illuminance of the light source 5, and is configured to switch emission of light for the bright portion 10 and emission of light for the dark portion 20 by adjusting the illuminance. This makes it easy to change the positions of the dark portions 20, 20a as illustrated in FIGS. 4 and 6 and to change the area of the dark portion 20 as illustrated in FIG. 7.

### (Modification 1)

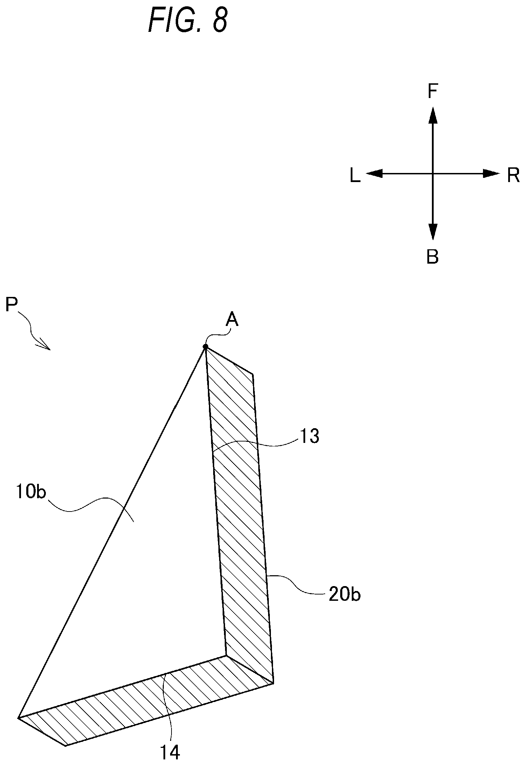

In the present embodiment, the bright portion 10 of the road surface rendering pattern P is rectangular. However, in the present disclosure, a shape of the bright portion 10 is not limited to a rectangle. For example, FIG. 8 illustrates a shape of a bright portion according to Modification 1. As illustrated in FIG. 8, a bright portion 10b may have a triangular shape. In this case, a dark portion 20b is desirably formed along an outer edge line 13 including an apex A that is a most front end in the traveling direction of the vehicle 100. More preferably, the dark portion 20b is desirably formed along the outer edge line 13 including the apex that is the most front end in the traveling direction of the vehicle 100 and another outer edge line 14 connected to the outer edge line 13.

### (Modification 2)

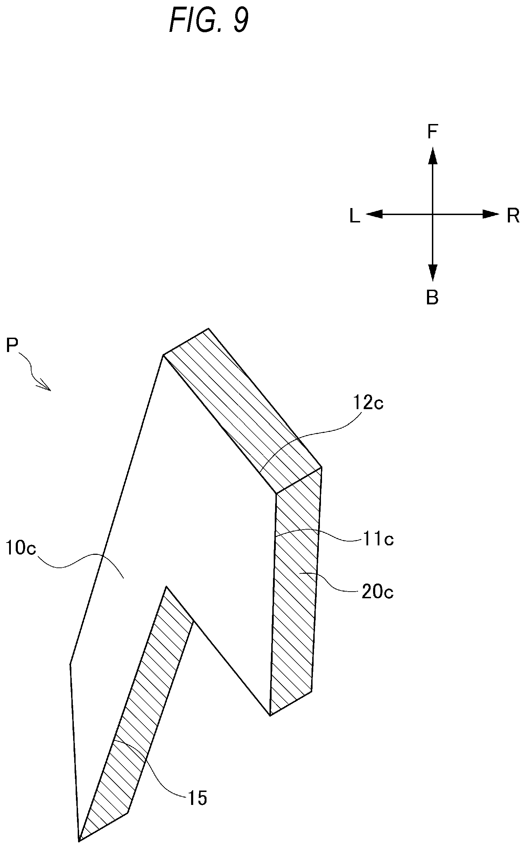

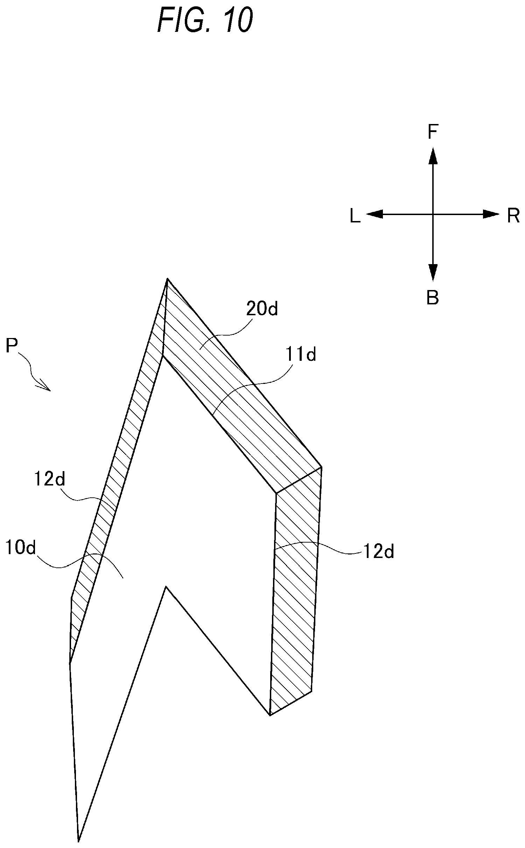

FIGS. 9 and 10 illustrate shapes of bright portions according to Modification 2. FIG. 9 further illustrates a dark portion 20c displayed when the camera 101 detects the pedestrian Y1 (see FIG. 3). FIG. 10 further illustrates a dark portion 20d displayed when the camera 101 detects the pedestrian Y2.

As illustrated in FIGS. 9 and 10, bright portions 10c, 10d may have an arrow shape. In this case, the dark portions 20c, 20d respectively determine positions where the dark portions 20c, 20d are formed relative to the bright portions 10c, 10d such that closest portions 11c, 11d, which are outer edge lines of the bright portions 10c, 10d that are close to the detected pedestrians Y1, Y2, appear to rise from the road surface. Further, the dark portions 20c, 20d are desirably displayed such that outer edge lines 12c, 12d of the bright portions 10c, 10d that are connected to the closest portions 11c, 11d at an obtuse angle appear to rise from the road surface.

In the illustration of FIG. 9, the pedestrian Y1 is present in the right-rear direction relative to the road surface rendering pattern P, and thus the outer edge line of the bright portion 10c which faces the right-rear direction is the closest portion 11c. Since the dark portion 20c is formed along the closest portion 11c, the closest portion 11c is visually recognized as rising. Further, since the dark portion 20c is formed along the outer edge line 12c of the bright portion 10c that is connected to the closest portion 11c at an obtuse angle, the outer edge line 12c is visually recognized as rising.

In the illustration of FIG. 10, the pedestrian Y2 is present in the right-front direction relative to the road surface rendering pattern P, and thus the outer edge line of the bright portion 10d which faces the right-front direction is the closest portion 11d. Since the dark portion 20d is formed along the closest portion 11d, the closest portion 11d is visually recognized as rising. Further, since the dark portion 20d is formed along the outer edge line 12d of the bright portion 10d that is connected to the closest portion 11d at an obtuse angle, the outer edge line 12d is visually recognized as rising.

In this manner, since the dark portions 20c, 20d are displayed along the outer edge lines of the bright portions 10c, 10d even in the road surface rendering pattern P including the arrow-shaped bright portions 10c, 10d as in Modification 2, the road surface rendering pattern P is seen as a three-dimensional obstacle from other traffic participants. For this reason, it is possible to cause the other traffic participants to take an instinctive action such as stopping to avoid a collision with the three-dimensional obstacle.

Further, as illustrated in FIGS. 9 and 10, since the closest portions 11c, 11d, which are the outer edge lines of the bright portions 10c, 10d that are close to the detected pedestrians Y1, Y2, rise from the road surface, it is possible to restrict the pedestrians Y1, Y2 from moving toward the road surface rendering pattern P.

Further, also in the road surface rendering pattern P according to Modification 2, the road surface rendering pattern P is displayed such that the closest portions 11c, 11d and the outer edge lines 12c, 12d connected to the closest portions 11c, 11d rise from the road surface when viewed from the pedestrians Y1, Y2, and thus the road surface rendering pattern P is displayed to have a more three-dimensional shape.

As illustrated in FIG. 9, the dark portion 20c may be formed not only along the closest portion 11c and the outer edge line 12c connected to the closest portion 11c but also along an outer edge line 15 not connected to the closest portion 11c or the outer edge line 12c.

As illustrated in FIG. 10, the dark portion 20d may be formed along the closest portion 11d and the two outer edge lines 12d.

Further, when the road surface rendering pattern P appears as a three-dimensional obstacle, the dark portions 20c, 20d may be displayed such that the outer edge lines of the bright portions 10c, 10d which are connected to the closest portions 11c, 11d at an acute angle rise.

### (Second Embodiment)

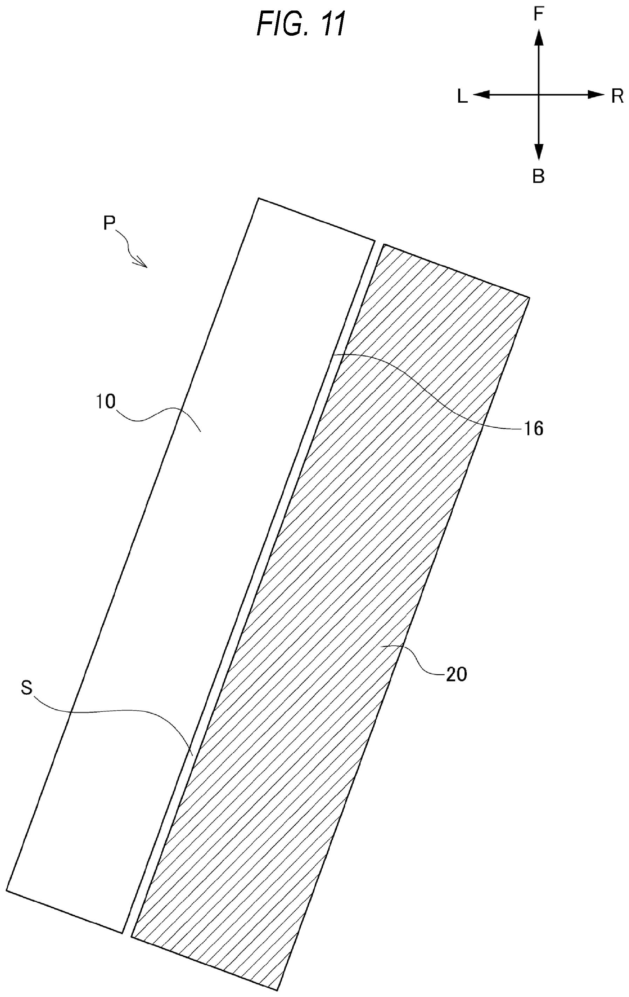

Next, an example of highlighting of the road surface rendering pattern P according to the second embodiment will be described. FIG. 11 illustrates an example of the road surface rendering pattern P according to the second embodiment. In the second embodiment, the dark portion 20 is formed along an outer edge line 16 of the bright portion 10 that extends in a radiation direction.

The "outer edge line 16 of the bright portion 10 that extends in the radiation direction" is an outer edge line having a smallest angle defined by intersecting the radiation direction. In the illustration of FIG. 3, the radiation direction is the forward direction. Accordingly, in the illustration of FIG. 11, the outer edge line of the bright portion 10 which extends in the right-front direction is the "outer edge line 16 of the bright portion 10 that extends in the radiation direction". For this reason, the dark portion 20 is formed along the outer edge line 16 of the bright portion 10 that extends in the right-front direction which is the radiation direction.

In a case where the distance D1 between the road surface rendering pattern P and the pedestrian Y1 is long, the road surface rendering pattern P may appear thin from the pedestrian Y1, and the road surface rendering pattern P may be less likely to be noticed. However, increasing an area of the bright portion 10 leads to an increase in manufacturing costs of the road surface rendering device 1.

In the road surface rendering device 1 according to the present embodiment, the dark portion 20 is projected along the radiation direction of the bright portion 10, and thus the road surface rendering pattern P is expanded in a width direction that is a direction intersecting the radiation direction, and visibility from the distant pedestrian Y1 is improved. Since the bright portion 10 itself is not expanded, it is possible to improve visibility while restricting an increase in costs such as an increase in the number of light sources that emit light for the bright portion 10.

As illustrated in FIG. 11, in the road surface rendering pattern P, a gap S may be formed between the bright portion 10 and the dark portion 20. This makes it easier to visually recognize the pattern of the bright portion 10.

The gap between the bright portion 10 and the dark portion 20 may also be formed in the road surface rendering pattern P according to the first embodiment.

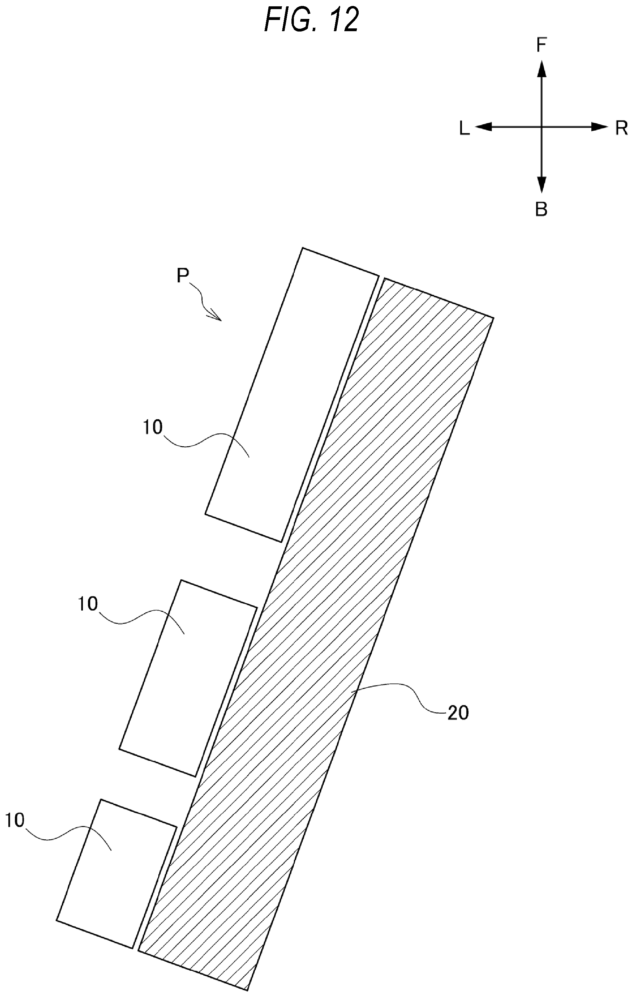

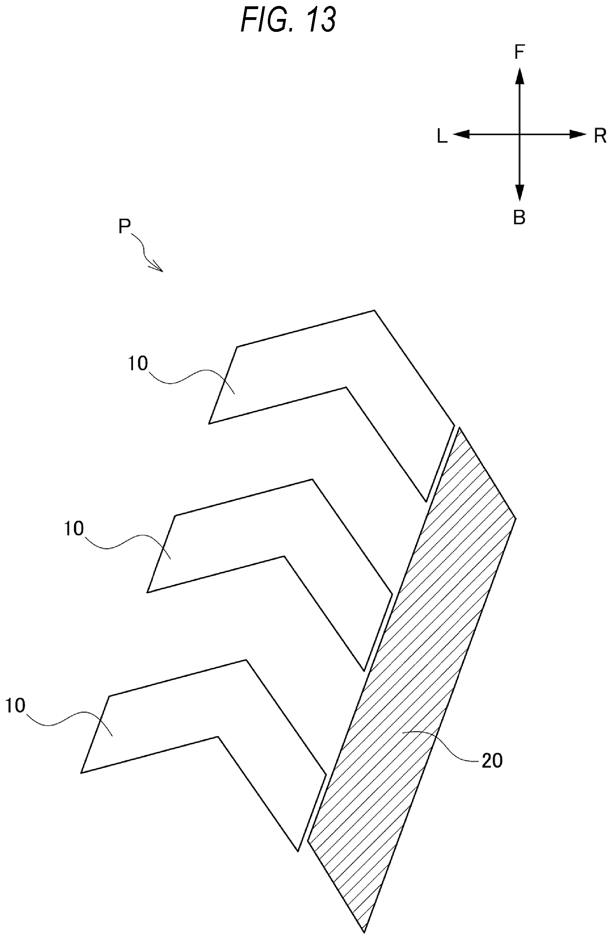

FIGS. 12 and 13 illustrate other examples of the road surface rendering pattern P according to the second embodiment. In the road surface rendering pattern P illustrated in FIG. 12, the bright portion 10 is constituted by three separated rectangular patterns. Also in this case, the dark portion 20 may be displayed as one pattern.

In the road surface rendering pattern P illustrated in FIG. 13, the bright portion 10 is constituted by three separated arrow patterns. Also in this case, the dark portion 20 may be displayed as one pattern.

The present disclosure has been described above based on the embodiments. The present embodiments are examples of the present disclosure, and the present disclosure is not limited to the above-described embodiments and can be appropriately modified or improved. In addition, materials, shapes, dimensions, numerical values, forms, numbers, arrangement places, and the like of components in the above-described embodiments are freely selected and are not limited as long as the present disclosure can be implemented.

The road surface rendering device 1 may not necessarily be mounted only on the vehicle 100. For example, as illustrated in FIG. 3, a traffic light 200 may include a road surface rendering device 201 that displays the road surface rendering pattern P.

The present application claims the priority based on a Japanese patent application No. 2023-141246 filed on August 31, 2023, and all contents described in the Japanese patent application are incorporated.

## Claims

1. A road surface rendering device (1) for displaying a road surface rendering pattern on a road surface,
wherein the road surface rendering pattern includes:
a bright portion; and
a dark portion projected along at least a part of the bright portion, the dark portion having lower luminance than the bright portion.

2. The road surface rendering device (1) according to claim 1,
wherein the road surface rendering pattern is visually recognizable by a traffic participant as if the road surface rendering pattern has a height, through a combination of the bright portion and the dark portion.

3. The road surface rendering device (1) according to claim 1 or 2,
wherein the dark portion is projected, based on pedestrian information including a position of a pedestrian, such that a closest portion appears to rise from the road surface, the closest portion being an outer edge line of the bright portion that is close to a detected pedestrian.

4. The road surface rendering device (1) according to claim 3,
wherein the dark portion is projected such that an outer edge line of the bright portion appears to rise from the road surface, the outer edge line being different from the closest portion and connected to the closest portion.

5. The road surface rendering device (1) according to claim 1 or 2,
wherein the dark portion is projected, based on vehicle information including a traveling direction of a vehicle, such that an outer edge line of the bright portion along a scheduled route of the vehicle appears to rise from the road surface.

6. The road surface rendering device (1) according to any one of claims 1 to 5,
configured so that an area of the dark portion to be formed changes according to a degree of risk derived based on pedestrian information including a position of a pedestrian and vehicle information including a traveling direction of a vehicle.

7. The road surface rendering device (1) according to any one of claims 1 to 6,
configured so that an area of the dark portion to be formed changes according to a lapse of time during which the road surface rendering pattern is displayed.

8. The road surface rendering device (1) according to any one of claims 1 to 7, further comprising:
a plurality of light sources (5) configured to emit light that defines the bright portion and the dark portion,
wherein the light sources (5) are configured to:
adjust illuminance of the light sources (5); and
switch emission of light for the bright portion and emission of light for the dark portion by adjusting the illuminance.

9. The road surface rendering device (1) according to any one of claims 1 to 8,
wherein the dark portion is formed along an outer edge line of the bright portion that extends in a projection direction.

10. The road surface rendering device (1) according to any one of claims 1 to 9,
wherein a gap is formed between the bright portion and the dark portion, in the road surface rendering pattern.
